# EUROPÄISCHE PATENTSCHRIFT

(11) **EP 1 907 715 B1**
(45) Veröffentlichungstag und Bekanntmachung des Hinweises auf die Patenterteilung: **12.10.2016**
(21) Anmeldenummer: 06777426.5
(22) Anmeldetag: 22.06.2006
(51) Int. Cl.: F16C 27/06, F16C 33/06

(54) **HÜLSE, INSBESONDERE AUßENHÜLSE FÜR EIN ELASTOMERLAGER, UND VERWENDUNG EINER DERARTIGEN HÜLSE IN EINEM ELASTOMERLAGER**
SLEEVE, IN PARTICULAR OUTER SLEEVE FOR AN ELASTOMERIC BEARING, AND USE OF SUCH A SLEEVE IN AN ELASTOMERIC BEARING
MANCHON, NOTAMMENT MANCHON EXTERIEUR POUR PALIER ELASTOMERE, ET USAGE D'UN TEL MANCHON DANS UN PALIER ELASTOMERE

(30) Priorität: 27.07.2005 DE 202005011722 U
(43) Veröffentlichungstag der Anmeldung: 09.04.2008
(73) Patentinhaber: Hühoco Metalloberflächenveredelung GmbH, 42279 Wuppertal (DE)
(72) Erfinder: WELSCH, Klaus, 58339 Breckerfeld (DE)
(74) Vertreter: Patent- und Rechtsanwälte Dr. Solf & Zapf
(86) Internationale Anmeldenummer: PCT/EP2006/063479
(87) Internationale Veröffentlichungsnummer: WO 2007/012528

(56) Entgegenhaltungen:
- BE-A- 639 653
- DE-A1- 2 516 534
- DE-B- 1 105 154
- GB-A- 492 005
- US-A- 4 593 889
- US-B1- 6 480 363

## Beschreibung

Die vorliegende Erfindung betrifft eine Hülse, insbesondere eine Außenhülse für ein Elastomerlager, mit einem ringförmigen, einen Schlitz aufweisenden Hülsenteil. Des Weiteren betrifft die Erfindung ein Elastomerlager mit einer derartigen Hülse.

Eine Hülse für eine Kunststofflagerbuchse mit einem ringförmigen, einen Schlitz aufweisenden Hülsenteil ist aus der DE-B-1 105 154 bekannt. Eine Hülse gemäß dem Oberbegriff des Anspruchs 1 ist aus US 6482363 bekannt.

Elastomerlager sind Konstruktionselemente, bei denen eine Innen- und eine Außenhülse durch eine vulkanisierte Elastomer- bzw. Gummischicht festhaftend miteinander verbunden sind. In der Regel weisen diese Bauteile eine zylindrische Form auf. Zur Einstellung bestimmter Eigenschaften, insbesondere einer Trennwirkung, kann die Elastomerschicht zusätzlich mit Zwischenblechen oder Zwischenhülsen versehen sein.

Zylindrische Elastomerlager dienen dazu, radiale und axiale Bewegungen zu dämpfen, wobei sie insbesondere tordierend wirkende Bewegungen und kardanische Auslenkungen aufnehmen. Sie werden zu diesem Zweck mit Preß- oder Klemmsitz befestigt, und dazu insbesondere jeweils in eine Aufnahme, z. B. eine Buchse, eingeschoben. Der Sitz der Elastomerlager in den Aufnahmen ist dabei ein wesentliches Qualitätskriterium, wobei zur Kontrolle dieses Merkmals unter definierten Bedingungen regelmäßig die Auspresskräfte aus der Aufnahme überprüft und mit entsprechenden Vorgaben verglichen werden.

Ursprünglich wurden zur Fertigung Elastomerlager-Außenhülsen ausschließlich Rohrabschnitte eingesetzt, die von handelsüblichen Präzisionsrohren abgestochen wurden. Derartige Rohrabschnitte verleihen den Hülsen hohe Festigkeiten und werden aus diesem Grund nach wie vor vielfach eingesetzt.

Zur Lagerfertigung wird das Elastomer in heißer und flüssiger Form in einen von der Hülse umschlossenen Innenraum gebracht und dort vulkanisiert. Dabei ist es technologie- bzw. werkstoffbedingt so, dass die Elastomerschicht während einer Abkühlung nach der Vulkanisation und Entformung schrumpft. Um diese Schrumpfspannungen abzubauen, werden die Bauteile als Fertigteil kalibriert. D. h., man reduziert den Außendurchmesser der Außenhülse zum Teil um mehrere Millimeter. Dieser zusätzliche Arbeitsgarig stellt, insbesondere bei den beschriebenen Rohrabschnitten, einen erheblichen Nachteil dar.

Eine bekannte Weiterentwicklung der aus Rohrabschnitten gebildeten Hülsen bilden sogenannte "geclinchte Hülsen", bei denen es möglich ist, das zylindrische Hülsenteil als Stanzteil aus einer ebenen Metalltafel, wie einem Blech, herzustellen. Das Stanzteil wird ringförmig gebogen, so dass ein Ring entsteht, dessen Mantelfläche durch einen Schlitz geteilt ist. Der Schlitz wird dann durch eine formschlüssige, als Clinchverbindung bezeichnete, Verbindung der freien Enden des Stanzteils geschlossen. Die freien Enden des Stanzteils weisen zu diesem Zweck keine geraden, sondern komplementär konturierte Kanten auf, wobei die komplementären Kantenkonturen zur Verbindungsbildung ineinander greifen.

Geclinchte Hülsen sind kostengünstiger herzustellen als Hülsen aus Rohrabschnitten, weisen aber den Nachteil auf, dass die Festigkeit infolge der Clinchverbindung deutlich geringer ist. Ein weiterer Nachteil besteht darin, dass die Verbindung nur bedingt dicht herzustellen ist. Dies wird insbesondere dadurch verursacht, dass der Gummi in der Regel in dünnflüssigem Zustand und unter hohem Druck eingespritzt wird. Dies wiederum führt dazu, dass der Gummi durch die Spalte der Clinchverbindung dringen, nach außen treten und an der Außenwandung der Hülse erstarren kann. Folglich ergibt sich nachteiligerweise ein zusätzlicher Putzaufwand.

Eine andere bekannte Weiterentwicklung gegenüber den aus Rohrabschnitten gebildeten Hülsen stellen sogenannte geschlitzte Hülsen dar. Auch bei diesen Hülsen ist es möglich, das zylindrische Hülsenteil als Stanzteil aus einer ebenen Metalltafel herzustellen und dann zu einem Ring zu biegen. Der in der Mantelfläche vorhandene Schlitz wird dabei jedoch nicht geschlossen, sondern die geschlitzten Hülsen weisen ein definiertes Öffnungsmaß zwischen den freien Enden des Stanzteils auf. Zum Verbau werden die Hülsen auf Block zusammengedrückt und in die Aufnahme einge schoben. Da die Schrumpfspannungen des Elastomers dann abgebaut sind, hat das Elastomerlager einen festen Sitz in der Auflage.

Sowohl geclinchte als auch geschlitzte Hülsen gehören zum Produktionsprogramm der Anmelderin und werden aus haftmittelbeschichtetem Band hergestellt.

Der vorliegenden Erfindung liegt die Aufgabe zu Grunde, eine Hülse, insbesondere eine Außenhülse für ein Elastomerlager der eingangs genannten Art zu schaffen, die sich bei hoher Funktionalität durch einen verringerten Herstellungsaufwand auszeichnet. Eine weitere, der Erfindung zu Grunde liegende Teilaufgabe besteht in der Schaffung eines entsprechenden Elastomerlagers.

Die genannte Aufgabe wird für eine Hülse der eingangs genannten Art durch das kennzeichen des Anspruchs 1 gelöst.

Bei der erfindungsgemäßen Hülse werden weder das innere, noch das äußere Hülsenteil geclincht, also formschlüssig verbunden, sondern die Verbindung erfolgt erst - und zwar stoffschlüssig - bei der Vulkanisation des Elastomers, wobei die erfindungsgemäß vorgesehenen Haftvermittlerschichten die Ausbildung dieser Verbindung gewährleisten. Dadurch entsteht ein erfindungsgemäßes Elastomerlager.

Die Herstellung der Verbindung kann dabei vorteilhafterweise auch erst in einem Prozeß beim Anwender erfolgen und wird dadurch realisiert, dass die flüssige Elastomer-, insbesondere Gummimischung zwischen die Innenumfangsfläche des äußeren Hülsenteils und die Außenumfangsfläche des inneren Hülsenteils fließen und sich jeweils mit dem Haftvermittler verbinden kann. Kanten, die die Schlitze im äußeren Hülsenteil und/oder im inneren Hülsenteil begrenzen, können daher vorteilhafterweise geradlinig ausgebildet sein, da sie nicht zur Verbindungsbildung bestimmt sind.

Bei der Herstellung der stoffschlüssigen Verbindung zwischen den Hülsenteilen kann zur Begünstigung des Durchtritts der fließfähigen Elastomermischung mit Vorteil vorgesehen sein, dass das innere Hülsenteil Öffnungen, insbesondere mindestens ein umfangsgemäß verlaufendes Langloch, vorzugsweise zwei oder mehr Langlöcher, aufweist.

Das erfindungsgemäße Elastomerlager erreicht hinsichtlich Dichtheit und Stabilität die Eigenschaften eines Rohrabschnittes. Von Vorteil sind dabei die einfachere und daher kostengünstigere Herstellung sowie die beschriebenen neuen konstruktiven Eigenheiten, die auch Möglichkeiten für weitere bauliche oder montagetechnische Gestaltungsmöglichkeiten eröffnen. Vorzugsweise kann vor der Montage bzw. vor dem Einbau eines erfindungsgemäßen Elastomerlagers eine Kalibration des Bauteiles entfallen. Die Hülsenteile sind dabei stabil miteinander verbunden und garantieren hohe Ausdrückkräfte.

Definierte Weiten der Schlitze, die für die Hülsenteile vorgesehen werden können, führen zu einem erfindungsgemäßen Elastomerlager, das - wie beim Einsatz einer Schlitzbuchse - eine vorteilhaft wirksam werdende Flexibilität aufweist, wobei Schrumpfspannungen in der Elastomerschicht minimiert werden.

Eine zusätzliche Erhöhung der Ausdrückräfte kann - und dies nicht nur bei einer erfindungsgemäß ausgebildeten Hülse oder einem erfindungsgemäß ausgebildeten Elastomerlager - auch dadurch erreicht werden, dass das äußere Hülsenteil zusätzlich auf seiner Außenumfangsfläche mit einer Haftvermittlerschicht und einer über dieser Haftvermittlerschicht liegenden Elastomerschicht versehen ist. Dies führt zu einer stumpfen, eine hohe Reibungszahl mit der Aufnahme herbeiführenden Oberfläche, was sich vorteilhaft auf das Auspressverhalten auswirkt.

Weitere vorteilhafte Ausführungen der Erfindung sind in den Unteransprüchen und der nachfolgenden speziellen Beschreibung enthalten. Anhand mehrerer in der beiliegenden Zeichnung dargestellter Ausführungsbeispiele wird die Erfindung näher erläutert.

Dabei zeigen:
- Fig. 1a und 1b: eine Ausführung eines äußeren Hülsenteils einer erfindungsgemäßen Hülse in der Vorder- und Seitenansicht,
- Fig. 2a und 2b: eine Ausführung eines inneren Hülsenteils einer erfindungsgemäßen Hülse in der Vorder- und Seitenansicht,
- Fig. 3a: eine Ausführung einer erfindungsgemäßen Hülse in der Vorderansicht,
- Fig. 3b: eine Ausführung einer erfindungsgemäßen Hülse in der Vorderansicht, jedoch vergrößert gegenüber Fig. 3a und teilgeschnitten in einem schlitzfreien Bereich,
- Fig. 4a bis 4c: eine Ausführung eines erfindungsgemäßen Elastomerlagers in der Vorderansicht, Draufsicht und im Schnitt, wobei Fig. 4a die Vorderansicht, Fig. 4b die Draufsicht und Fig. 4c einen Schnitt gemäß der Linie III-III in Fig. 4b darstellt,
- Fig. 5a bis 5d: typische Belastungsfälle, denen ein erfindungsgemäßes Elastomerlager bei seiner Verwendung ausgesetzt ist,
- Fig. 6: im Teilschnitt, eine weitere Ausführung eines äußeren Hülsenteils einer erfindungsgemäßen Hülse.

In den verschiedenen Figuren der Zeichnung sind gleiche Teile stets mit den gleichen Bezugszeichen versehen, so dass sie in der Regel auch jeweils nur einmal beschrieben werden.

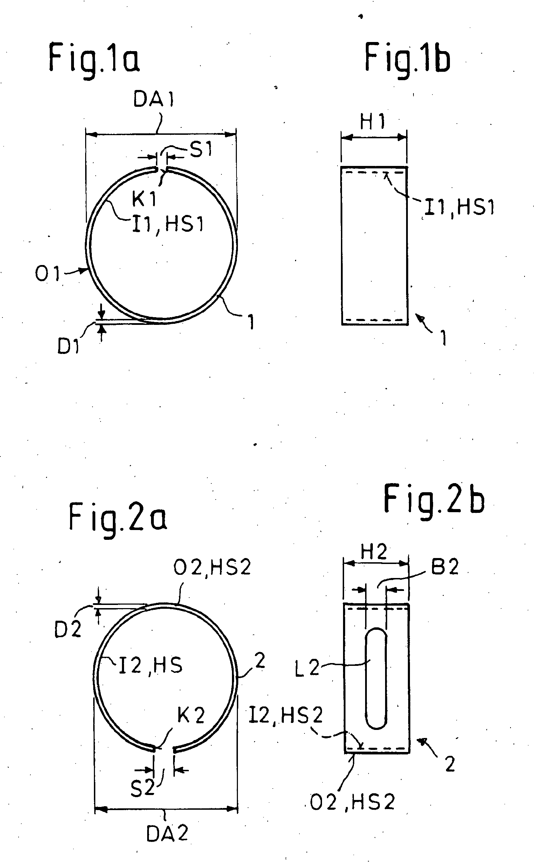

Wie zunächst aus Fig. 1a, 1b und 2a, 2b hervorgeht, umfaßt eine erfindungsgemäße Hülse zwei ringförmige Hülsenteile, ein in Fig. 1a, 1b dargestelltes äußeres Hülsenteil 1 und ein in Fig. 2a, 2b dargestelltes inneres Hülsenteil 2. Das äußere Hülsenteil 1 und/oder das innere Hülsenteil 2 können vorzugsweise - in technologisch vorteilhafter Ausführung - jeweils aus einem Blech bestehende Biege-Stanzteile sein.

Die Hülsenteile 1, 2 weisen jeweils einen Schlitz S1, S2 auf und besitzen eine Höhe H1, H2, eine Dicke D1, D2 und einen Außendurchmesser DA1, DA2. Kanten K1, K2, die die Schlitze S1, S2 im äußeren Hülsenteil 1 und im inneren Hülsenteil 2 begrenzen, sind geradlinig ausgeführt.

Das äußere Hülsenteil 1 ist auf seiner Innenumfangsfläche 11 und das innere Hülsenteil 2 auf seiner Innenumfangsfläche 12 und auf seiner Außenumfangsfläche 02 jeweils mit einer Haftvermittlerschicht (HS1 für das erste Hülsenteil 1, HS2 für das zweite Hülsenteil) versehen.

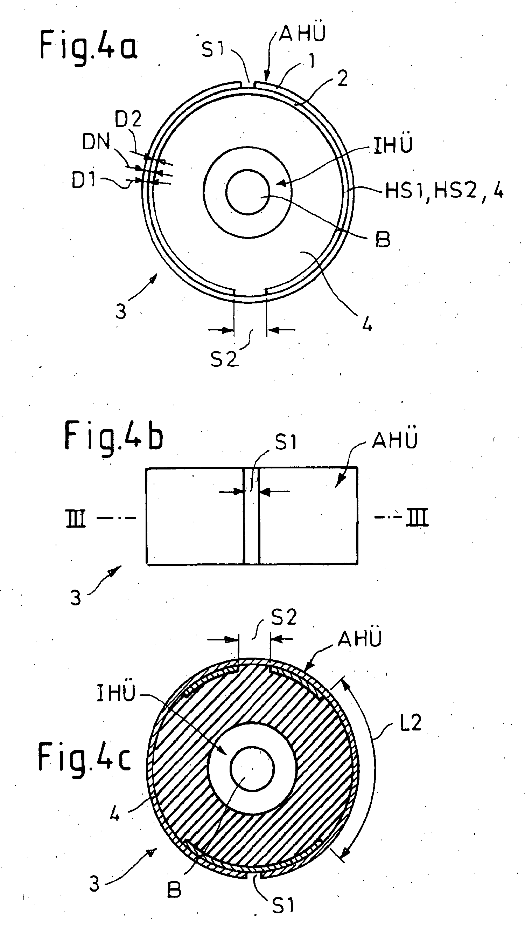

Die erfindungsgemäße Hülse mit ihren beiden Hülsenteilen 1, 2 ist insbesondere dazu bestimmt, eine Außenhülse AHÜ für ein erfindungsgemäßes Elastomerlager 3 zu bilden, welches in den Figuren 4a, 4b und 4c dargestellt ist.

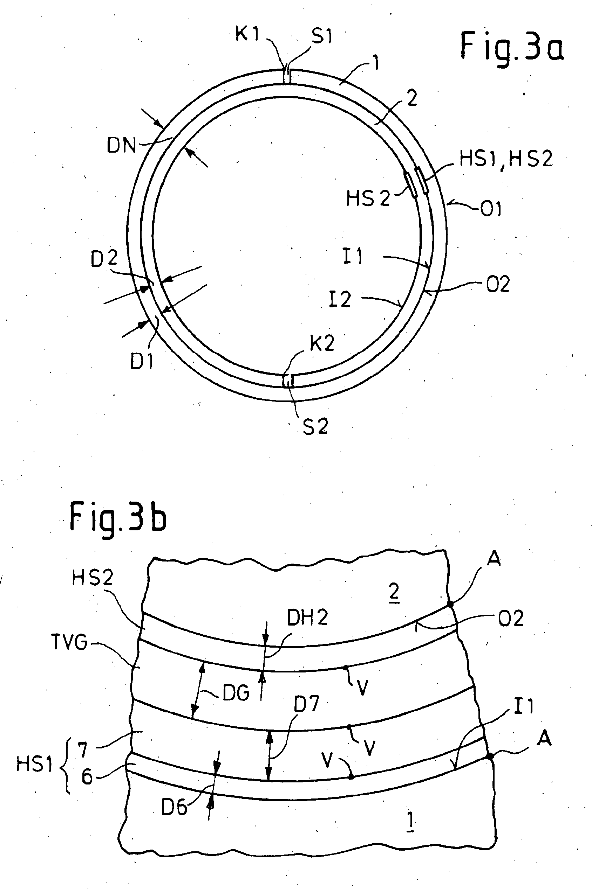

In der Außenhülse AHÜ sind - wie dies auch die Darstellungen der erfindungsgemäßen Hülse in Fig. 3a und 3b zeigen - die beiden ringförmigen Hülsenteile 1, 2 koaxial zueinander angeordnet. Insbesondere ist zur Bildung der Hülse das äußere Hülsenteil 1 zunächst mit Klemmsitz auf das innere Hülsenteil 2 geschoben. Die Schlitze S1, S2 im äußeren Hülsenteil und im inneren Hülsenteil sind um 180° versetzt zueinander angeordnet. Eine Nenndicke DN der Hülse kann sich dabei - wie dies Fig. 3a und Fig. 4a veranschaulichen - bevorzugt aus der Summe der Dicken D1, D2 des äußeren Hülsenteils 1 und des inneren Hülsenteils 2 ergeben.

Die vergrößerte Ausschnittsdarstellung in Fig. 3b zeigt wie die Haftvermittlerschichten HS1, HS2 - des äußeren Hülsenteils 1 auf seiner Innenumfangsfläche I1 und des inneren Hülsenteils 2 auf seiner Außenumfangsfläche 02, die in Fig. 1a bis 3a nur schematisch angedeutet sind - im Detail aufgebaut sein können.

Bei der Haftvermittlerschicht HS1 auf der Innenumfangsfläche 11 des äußeren Hülsenteils 1 handelt es sich dabei um eine Doppelschicht, die aus einer direkt auf der Innenumfangsfläche 11 abgeschiedenen Primerschicht 6 auf Phenolharzbasis, welche vorzugsweise eine Trockenfilmschichtdicke D6 von 1 bis 2 µm aufweisen kann, und aus einer über der Primerschicht 6 liegenden Gummihaftvermittlerschicht 7 für z. B. NR, NBR, HNBR usw., welche vorzugsweise eine Trockenfilmschichtdicke D7 von 3 bis 9 µm aufweisen kann, besteht.

Bei der Haftvermittlerschicht HS2 auf der Außenumfangsfläche 02 des inneren Hülsenteils 2 handelt es sich um eine einfache Gummihaftvermittlerschicht, welche vorzugsweise eine Trockenfilmschichtdicke DH2 von 1 bis 2 µm aufweisen kann.

Zusätzlich zu den Haftvermittlerschichten HS1, HS2 ist zwischen diesen Schichten eine teilvernetzte Gummischicht TVG mit der Dicke DG vorgesehen. Die Dicke kann dabei bevorzugt in einem Bereich von etwa 5 bis 15 µm liegen.

Die in Fig. 3b schematisch durch die Pfeile A angedeuteten Adhäsionskräfte an den Umfangsflächen 11, 02 der Hülsenteile 1, 2 sowie die durch die unvollständige Vernetzung in den Grenzschichten zwischen der Gummischicht TVG und den Haftvermittlerschichten HS1, HS2 auftretenden Bindungskräfte - angedeutet durch die Doppelpfeile mit dem Bezugszeichen V - können neben dem bereits erwähnten Klemmsitz eine stoffschlüssige Bindung zwischen den Hülsenteilen 1, 2 herstellen.

Das erfindungsgemäße Elastomerlager 3, weist neben der Außenhülse AHÜ - als einem mit einer Bohrung B versehenen Kern - eine Innenhülse IHÜ auf, die durch eine vulkanisierte Elastomerschicht 4 festhaftend mit der Außenhülse AHÜ verbunden ist.

Wie insbesondere Fig. 2b und Fig. 4c veranschaulichen, weist das innere Hülsenteil 2 Öffnungen, insbesondere zwei Langlöcher L2, für den Durchtritt einer fließfähigen Elastomermischung auf, die dazu bestimmt ist, die vulkanisierte Elastomerschicht zu bilden.

Zur Herstellung des erfindungsgemäßen Elastomerlagers 3 wird die Elastomermischung, insbesondere Gummi, wie beispielsweise Naturkautschuk, in dünnflüssigem Zustand bei erhöhter Temperatur und unter hohem Druck in den von dem inneren Hülsenteil 2 umschlossenen Raum eingespritzt. Dabei gelangt die Elastomermischung, insbesondere über die Langlöcher L2, aber auch über den Schlitz S2 des inneren Hülsenteils 2 zwischen die einander zugewandten Flächen der Hülsenteile 1, 2, also zwischen die Innenumfangsfläche 11 des äußeren Hülsenteils 1 und die Außenumfangsfläche 02 des inneren Hülsenteils 2. Einem Eindringen der Elastomermischung im Bereich des Schlitzes S1 des äußeren Hülsenteils 1 wird durch den erwähnten Schlitzversatz vorgebeugt.

Mit Ablauf der Vulkanisation der Elastomermischung werden die Hülsenteile 1, 2 stoff-schlüssig, insbesondere über das zwischen den einander zugewandten Flächen der Hülsenteile 1, 2 befindliche aus der Elastomerschicht 4 eingedrungene Elastomer sowie über die an den Flächen 11, 02 befindlichen Haftvermittlerschichten HS1, HS2 festhaftend aneinander gebunden.

Falls das Vorhandensein einer teilvernetzten Gummischicht TVG zwischen den Haftvermittlerschichten HS1, HS2 vorgesehen ist, so kann diese Gummischicht TVG sowohl bei der beschriebenen Vulkanisation vollständig vulkanisieren, als sich auch mit dem aus der Elastomerschicht 4 eingedrungenen Elastomer verbinden. Dadurch kommt es mit Vorteil vollflächig, d. h. über die gesamten Umfangsfächen 11, 02 - auch dort, wohin möglicherweise kein Elastomer aus der Elastomerschicht 4 eindringt - zu einem einheitlich festen Verbund der Hülsenteile 1, 2. Dies ist besonders dort von Bedeutung, wo unter den Betriebsbedingungen des erfindungsgemäßen Elastomerlagers 3, beispielsweise bei einem Einsatz in einem Fahrzeug, Kräfte auftreten, die auf die Verbindung der Hülsenteile 1, 2 eine Scherwirkung ausüben.

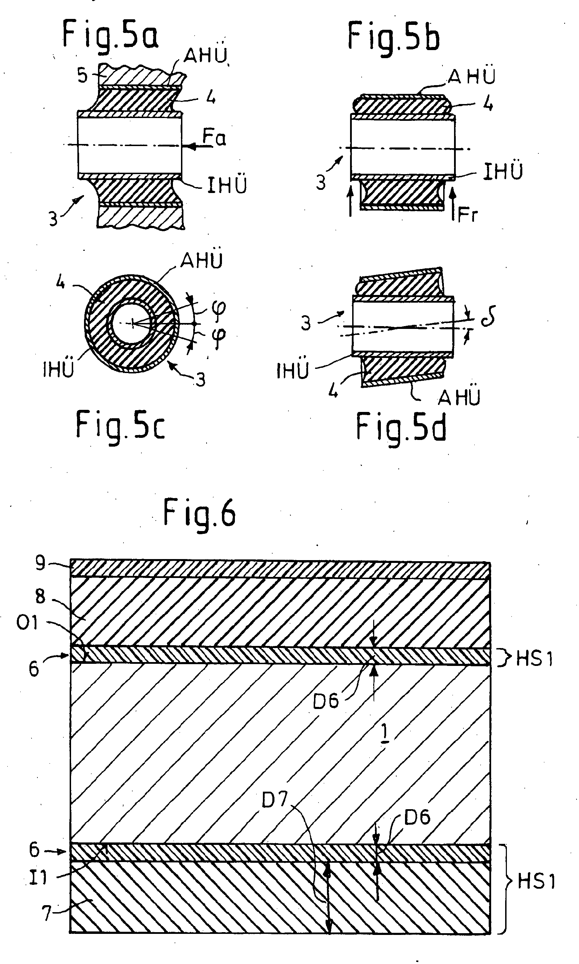

Ein weiterer für die Haftvermittlerschichten HS1, HS2 möglicher Aufbau wird auch exemplarisch für das äußere Hülsenteil 1 anhand von Fig. 6 beschrieben.

Mit dem erfindungsgemäß gegenüber herkömmlichen Elastomerlagern verringertem . Herstellungsaufwand verbindet sich eine hohe Funktionalität, die sich durch eine hohe Belastbarkeit bei Vorliegen der in Fig. 5a bis 5d dargestellten typischen Belastungsfälle ausdrückt, denen ein erfindungsgemäßes Elastomerlager 3 bei seiner Verwendung ausgesetzt ist. In Fig. 5a ist dabei auch eine Aufnahme 5 dargestellt, in der das Lager mit Preß- oder Klemmsitz befestigt ist. Das erfindungsgemäße Elastomerlager 3 ist sowohl dazu geeignet, axiale Kräfte Fa (Fig. 5a) und radiale Kräfte Fr (Fig. 5b) und entsprechende Bewegungen zu dämpfen, als auch tordierend wirkende Bewegungen - dargestellt durch den Torsionswinkel Φ in Fig. 5c - und kardanische Auslenkungen - dargestellt durch den Auslenkungswinkel δ in Fig. 5d - aufnehmen.

Der in Fig. 5a dargestellte Belastungsfall entspricht dabei im Wesentlichen auch demjenigen, welcher bei einer Prüfung des qualitätsgerechten Sitzes von erfindungsgemäßen Elastomerlagern 3 in ihren Aufnahmen 5 zu Grunde zu legen ist.

Der in Fig. 5a dargestellte Belastungsfall entspricht dabei im Wesentlichen auch demjenigen, welcher bei einer Prüfung des qualitätsgerechten Sitzes von erfindungsgemäßen Elastomerlagern 3 in ihren Aufnahmen 5 zu Grunde zu legen ist.

Der Verbund der Hülsenteile 1, 2 in einer erfindungsgemäßen Hülse ist hochstabil und garantiert hohe Ausdrückkräfte für ein erfindungsgemäßes Elastomerlager 3. Zur Erhöhung der Ausdrückkräfte können jedoch mit Vorteil noch weitere, zusätzliche Maßnahmen vorgesehen sein. So ist es möglich, dass zu dem genannten Zweck auf der Außenumfangsfläche 01 des äußeren Hülsenteils 1 eine Rändelung eingeprägt ist.

Eine weitere, diesbezüglich vorteilhafte Möglichkeit wird durch Fig. 6 im Detail veranschaulicht. Die Zeichnung zeigt dabei ein äußeres Hülsenteil 1. Das Hülsenteil 1 kann aus einem Metallband jeglicher Art gefertigt sein.

Auf der Innenumfangsfläche 11 und auf der Außenumfangsfläche 01 ist das Hülsenteil 1 jeweils mit einer Haftvermittlerschicht HS1 beschichtet.

Bei der Haftvermittlerschicht HS1 auf der Innenumfangsfläche 11 handelt es sich dabei um eine Doppelschicht, die aus einer direkt auf der Innenumfangsfläche I1 abgeschiedenen Primerschicht 6 auf Phenolharzbasis, welche vorzugsweise eine Trockenfilmschichtdicke D6 von 1 bis 3 µm aufweisen kann, und aus einer über der Primerschicht 6 liegenden Gummihaftvermittlerschicht 7 für z. B. NR, NBR, HNBR usw., welche vorzugsweise eine Trockenfilmschichtdicke D7 von 10 bis 30 µm aufweisen kann, besteht.

Bei der Haftvermittlerschicht HS1 auf der Außenumfangsfläche 01 handelt es sich um eine einfache Schicht, die aus einer Primerschicht 6 auf Phenolharzbasis bestehen kann, wie diese auch Bestandteil der Doppelschicht ist.

Auf der Außenumfangsfläche 01 des Hülsenteils 1 liegt über der Haftvermittlerschicht HS1 eine Elastomerschicht 8, bei der es sich beispielsweise um eine vollvernetzte, insbesondere aus NBR bestehende, Gummischicht mit einer bevorzugten Shore-A-Härte von 70 handeln kann. Die Elastomerschicht 8 führt zu einer Oberfläche des Hülsenteils 1, durch die in einer Aufnahme 5 eine hohe Reibungszahl herbeigeführt wird, was sich - wie bereits erwähnt - vorteilhaft auf das Auspressverhalten auswirkt.

Zum Schutz bei Transport oder bei mechanischer Bearbeitung des Hülsenteils 1 kann, wie in Fig. 6 gezeigt, die Elastomerschicht optional mit einer Schutzfolie 9 abgedeckt sein.

Die Erfindung beschränkt sich nicht auf die vorstehenden Ausführungsbeispiele. So ist es beispielsweise auch möglich, anstelle der beschriebenen Haftvermittler in der Haftvermittlerschicht HS1, HS2 andere Systeme einzusetzen, ohne dass der Rahmen der Erfindung verlassen wird. Der Winkelversatz des Schlitzes S1 im äußeren Hülsenteil 1 gegenüber dem Schlitz S2 im inneren Hülsenteil 2 kann bevorzugt 90°, 180° oder 270° betragen, aber auch andere Werte annehmen. Die stoffschlüssige Verbindung zwischen der Innenumfangsfläche 11 des äußeren Hülsenteils 1 und der Außenumfangsfläche 02 des inneren Hülsenteils 2 kann vollflächig oder nur an einer oder mehreren Teilflächen der Umfangsflächen 11, 02 ausgebildet sein.

Außerdem bestehen vielfältige weitere Gestaltungsmöglichkeiten der Erfindung, beispielsweise im Einsatz an sich bekannter oder auch neuer Primer als Bestandteil der ersten Schicht des erfindungsgemäß beispielsweise als Doppelschicht ausgebildeten Haftvermittlersystems oder bei der Gestaltung der Rezeptur der von der Außenhülse AHÜ umschlossenen oder der auf die äußere Oberfläche 01 der Außenhülse AHÜ aufgebrachten Elastomere.

### Bezugszeichen

- 1: äußeres Hülsenteil
- 2: inneres Hülsenteil
- 3: Elastomerlager
- 4: Elastomer in AHÜ
- 5: Aufnahme für 3
- 6: Primerschicht von HS1, HS2
- 7: Gummihaftvermittlerschicht von HS1, HS2
- 8: Elastomerschicht auf 6
- 9: Schutzfolie auf 8

- A: Adhäsion
- AHÜ: Außenhülse von 3
- B: Bohrung in IHÜ
- D1: Dicke von 1
- D2: Dicke von 2
- D6: Dicke von 6
- D7: Dicke von 7
- DA1: Außendurchmesser von 1
- DA2: Außendurchmesser von 2
- DG: Dicke von TVG
- DH2: Dicke von HS2 (Fig. 3b)
- DN: Nenndicke von AHÜ
- Fa: Axialkraft
- Fr: Radialkraft
- H1: Höhe von 1
- H2: Höhe von 2
- HS1: Haftvermittlerschicht auf I1, 01
- HS2: Haftvermittlerschicht auf 12, 02
- I1: Innenumfangsfläche von 1
- I2: Innenumfangsfläche von 2
- IHÜ: Innenhülse von 3
- K1: Kante von 1, neben S1
- K2: Kante von 2, neben S2
- L2: Langloch in 2
- O1: Außenumfangsfläche von 1
- O2: Außenumfangsfläche von 2
- S2: Schlitz in 2
- S1: Schlitz in 1
- TVG: teilvernetzte Gummischicht

- Φ: Torsionswinkel
- δ: Auslenkungswinkel

## Patentansprüche

1. Hülse, insbesondere Außenhülse (AHÜ) für ein Elastomerlager (3), mit einem ringförmigen, einen Schlitz (S1) aufweisenden Hülsenteil (1), welches ein erstes äußeres Hülsenteil (1) bildet und koaxial zu einem zweiten, inneren Hülsenteil (2) angeordnet ist, welches ebenfalls einen Schlitz (S2) aufweist, wobei die Schlitze (S1, S2) der Hülsenteile (1, 2) versetzt zueinander angeordnet sind,
**dadurch gekennzeichnet, dass** das äußere Hülsenteil (1) auf seiner Innenumfangsfläche (11) und das innere Hülsenteil (2) auf seiner Innenumfangsfläche (I2) und auf seiner Außenumfangsfläche (02) jeweils mit einer Haftvermittlerschicht (HS1, HS2) zur Ausbildung einer - durch Vulkanisation mit einer fließfähigen Elastomermischung - stoffschlüssigen Verbindung versehen ist.

2. Hülse nach Anspruch 1,
**dadurch gekennzeichnet, dass** das äußere Hülsenteil (1) mit Klemmsitz auf das innere Hülsenteil (2) geschoben ist.

3. Hülse nach Anspruch 1 oder 2,
**dadurch gekennzeichnet, dass** das äußere Hülsenteil (1) mit dem inneren Hülsenteil (2) über eine zunächst nur teilvulkanisierte Gummischicht (TVG) verbunden ist.

4. Hülse nach einem der Ansprüche 1 bis 3,
**dadurch gekennzeichnet, dass** das zwischen der Innenumfangsfläche (11) des äußeren Hülsenteils (1) und der Außenumfangsfläche (02) des inneren Hülsenteils (2) vollflächig oder nur an einer oder mehreren Teilflächen der Umfangsflächen (11, 02) eine stoffschlüssige Verbindung besteht.

5. Hülse nach einem der Ansprüche 1 bis 4,
**dadurch gekennzeichnet, dass** das innere Hülsenteil (2) Öffnungen, insbesondere mindestens ein umfangsgemäß verlaufendes Langloch (L2), vorzugsweise zwei oder mehr Langlöcher (L2), für den Durchtritt einer fließfähigen Elastomermischung aufweist.

6. Hülse nach einem der Ansprüche 1 bis 5,
**dadurch gekennzeichnet, dass** das äußere Hülsenteil (1) und/oder das innere Hülsenteil (2) jeweils aus einem Blech bestehende Biege-Stanzteile sind.

7. Hülse nach einem der Ansprüche 1 bis 6,
**dadurch gekennzeichnet, dass** die Schlitze (S1, S2) im äußeren Hülsenteil (1) und/oder im inneren Hülsenteil (2) begrenzende Kanten (K1, K2) geradlinig ausgebildet sind.

8. Hülse nach einem der Ansprüche 1 bis 7,
**dadurch gekennzeichnet, dass** die Schlitze (S1, S2) im äußeren Hülsenteil (1) und im inneren Hülsenteil (2) um 90°, 180° oder 270° versetzt zueinander angeordnet sind.

9. Hülse nach einem der Ansprüche 1 bis 8,
**dadurch gekennzeichnet, dass** sich eine Nenndicke (DN) der Hülse aus der Summe der Dicken (D1, D2) des äußeren Hülsenteils (1) und des inneren Hülsenteils (2) ergibt.

10. Hülse nach einem der Ansprüche 1 bis 9,
**dadurch gekennzeichnet, dass** auf der Außenumfangsfläche (O1) des äußeren Hülsenteils (1) eine Rändelung eingeprägt ist.

11. Hülse nach einem der Ansprüche 1 bis 10,
**dadurch gekennzeichnet, dass** das äußere Hülsenteil (1) auf seiner Innenumfangsfläche (I1) und auf seiner Außenumfangsfläche (O1) mit einer Haftvermittlerschicht (HS1) und auf seiner Außenumfangsfläche (O1) mit einer über der Haftvermittlerschicht (HS) liegenden Elastomerschicht (8) versehen ist.

12. Hülse nach Anspruch 11,
**dadurch gekennzeichnet, dass** die Haftvermittlerschicht (HS1) auf der Außenumfangsfläche (O1) des äußeren Hülsenteils (1) aus einer direkt auf der Außenumfangsfläche (O1) abgeschiedenen Primerschicht (6) auf Phenolharzbasis besteht.

13. Hülse nach einem der Ansprüche 1 bis 12,
**dadurch gekennzeichnet, dass** die Haftvermittlerschicht (HS1) auf der Innenumfangsfläche (I1) des äußeren Hülsenteils (1) und/oder die Haftvermittlerschicht (HS2) auf der Außenumfangsfläche (02) des inneren Hülsenteils (2) eine Doppelschicht (6, 7) ist, die aus einer direkt auf der Innenumfangsfläche (I1) und/oder Außenumfangsfläche (02) abgeschiedenen Primerschicht (6) auf Phenolharzbasis und aus einer über der Primerschicht (6) liegenden Gummihaftvermittlerschicht (7) besteht.

14. Hülse nach Anspruch 12 oder 13,
**dadurch gekennzeichnet, dass** die direkt auf der Innenumfangsfläche (I1) oder der Außenumfangsfläche (O1) abgeschiedene Primerschicht (6) eine Trockenfilmschichtdicke (D6) im Bereich von 1 bis 3 µm aufweist.

15. Hülse nach Anspruch 13 oder 14,
**dadurch gekennzeichnet, dass** die über der Primerschicht (6) liegende Gummihaftvermittlerschicht (7) eine Trockenfilmschichtdicke (D7) im Bereich von 3 bis 30 µm aufweist.

16. Hülse nach einem der Ansprüche 11 bis 15,
**dadurch gekennzeichnet, dass** die über der Haftvermittlerschicht (HS1) liegende Elastomerschicht (8) eine vollvernetzte, insbesondere aus NBR bestehende, Gummischicht, bevorzugt mit einer Shore-A-Härte von 70 ist.

17. Hülse nach einem der Ansprüche 11 bis 16,
**dadurch gekennzeichnet, dass** die über der Haftvermittlerschicht (HS1) liegende Elastomerschicht (8) mit einer Schutzfolie (9) abgedeckt ist.

18. Verwendung einer Hülse nach einem der Ansprüche 1 bis 15 als Außenhülse (AHÜ) in einem Elastomerlager (3), wobei die Außenhülse (AHÜ) durch eine vulkanisierte Elastomerschicht (4) mit einer Innenhülse (IHÜ) festhaftend verbunden ist.

19. Verwendung nach Anspruch 18,
**dadurch gekennzeichnet, dass** die Hülsenteile (1, 2) in dem Elastomerlager (3) über ein zwischen den einander zugewandten Flächen (I1, 02) der Hülsenteile (1, 2) befindliches, zwischen der Innenumfangsfläche (I1) des äußeren Hülsenteils (1) und der Außenumfangsfläche (02) des inneren Hülsenteils (2) angeordnetes, aus der Elastomerschicht (4) stammendes Elastomer sowie über ihre jeweiligen Haftvermittlerschichten (HS1, HS2) aneinander gebunden sind.

## Claims

1. Sleeve, in particular outer sleeve (AHÜ) for an elastomer bearing (3), with an annular sleeve part (1) comprising a slit (S1), which sleeve part (1) forms a first, outer sleeve part (1) and is arranged coaxially with a second, inner sleeve part (2), which likewise comprises a slit (S2), the slits (S1, S2) of the sleeve parts (1, 2) being staggered in relation to one another,
**characterized in that** the outer sleeve part (1) is, on its inner peripheral surface (I1), and the inner sleeve part (2) is, on its inner peripheral surface (I2) and on its outer peripheral surface (02), provided in each case with a bonding-agent layer (HS1, HS2) in order to form a material connection by vulcanization with a free-flowing elastomer mixture

2. Sleeve according to Claim 1, **characterized in that** the outer sleeve part (1) is pushed onto the inner sleeve part (2) with a press fit.

3. Sleeve according to Claim 1 or 2, **characterized in that** the outer sleeve part (1) is connected to the inner sleeve part (2) via a rubber layer (TVG) which is to begin with only partially vulcanized.

4. Sleeve according to one of Claims 1 to 3, **characterized in that** a material connection exists between the inner peripheral surface (11) of the outer sleeve part (1) and the outer peripheral surface (02) of the inner sleeve part (2) over the whole surface or only on one or more part areas of the peripheral surfaces (11, 02).

5. Sleeve according to one of Claims 1 to 4, **characterized in that** the inner sleeve part (2) comprises openings, in particular at least one slot (L2), preferably two or more slots (L2), extending according to the periphery for passage of a free-flowing elastomer mixture.

6. Sleeve according to one of Claims 1 to 5, **characterized in that** the outer sleeve part (1) and/or the inner sleeve part (2) are in each case bent punchings consisting of a metal sheet.

7. Sleeve according to one of Claims 1 to 6, **characterized in that** edges (K1, K2) delimiting the slits (S1, S2) in the outer sleeve part (1) and/or in the inner sleeve part (2) are of rectilinear design.

8. Sleeve according to one of Claims 1 to 7, **characterized in that** the slits (S1, S2) in the outer sleeve part (1) and in the inner sleeve part (2) are staggered in relation to one another by 90°, 180° or 270°.

9. Sleeve according to one of Claims 1 to 8, **characterized in that** a nominal thickness (DN) of the sleeve results from the sum of the thicknesses (D1, D2) of the outer sleeve part (1) and of the inner sleeve part (2).

10. Sleeve according to one of Claims 1 to 9, **characterized in that** knurling is impressed on the outer peripheral surface (O1) of the outer sleeve part (1).

11. Sleeve according to one of Claims 1 to 10, **characterized in that** the outer sleeve part (1) is, on its inner peripheral surface (I1) and on its outer peripheral surface (01), provided with a bonding-agent layer (HS1) and, on its outer peripheral surface (O1), provided with an elastomer layer (8) lying over the bonding-agent layer (HS).

12. Sleeve according to Claim 11, **characterized in that** the bonding-agent layer (HS1) on the outer peripheral surface (01) of the outer sleeve part (1) consists of a primer layer (6) based on phenolic resin, which is deposited directly on the outer peripheral surface (01).

13. Sleeve according to one of Claims 1 to 12, **characterized in that** the bonding-agent layer (HS1) on the inner peripheral surface (I1) of the outer sleeve part (1) and/or the bonding-agent layer (HS2) on the outer peripheral surface (02) of the inner sleeve part (2) is a double layer (6, 7) which consists of a primer layer (6) based on phenolic resin, which is deposited directly on the inner peripheral surface (11) and/or outer peripheral surface (02), and of a rubber bonding-agent layer (7) lying over the primer layer (6).

14. Sleeve according to Claim 12 or 13, **characterized in that** the primer layer (6) deposited directly on the inner peripheral surface (I1) or the outer peripheral surface (01) has a dry film layer thickness (D6) in the range from 1 to 3 µm.

15. Sleeve according to Claim 13 or 14, **characterized in that** the rubber bonding-agent layer (7) lying over the primer layer (6) has a dry film layer thickness (D7) in the range from 3 to 30 µm.

16. Sleeve according to one of Claims 11 to 15, **characterized in that** the elastomer layer (8) lying over the bonding-agent layer (HS1) is a fully crosslinked rubber layer, consisting in particular of NBR, preferably with a Shore A hardness of 70.

17. Sleeve according to one of Claims 11 to 16, **characterized in that** the elastomer layer (8) lying over the bonding-agent layer (HS1) is covered with a protective film (9).

18. Use of a sleeve according to one of Claims 1 to 15 as outer sleeve (AHÜ) in an elastomer bearing (3), the outer sleeve (AHÜ) being interconnected adherently by a vulcanized elastomer layer (4) with an inner sleeve (IHÜ).

19. Use according to Claim 18, **characterized in that** the sleeve parts (1, 2) in the elastomer bearing (3) are bonded to one another via an elastomer which is located between the surfaces (11, 02) facing one another of the sleeve parts (1, 2), is arranged between the inner peripheral surface (I1) of the outer sleeve part (1) and the outer peripheral surface (02) of the inner sleeve part (2) and originates from the elastomer layer (4) and also via their respective bonding-agent layers (HS1, HS2).

## Revendications

1. Manchon, notamment manchon externe (AHÜ) pour un coussinet en élastomère (3), comprenant une partie de manchon annulaire (1) possédant une fente (S1), laquelle forme une première partie de manchon extérieure (1) et est disposée de manière coaxiale par rapport à une deuxième partie de manchon intérieure (2), laquelle possède également une fente (S2), les fentes (S1, S2) des parties de manchon (1, 2) étant disposées décalées l'une par rapport à l'autre,
**caractérisé en ce que** la partie de manchon extérieure (1), sur sa surface circonférentielle interne (I1), et la partie de manchon intérieure (2), sur sa surface circonférentielle interne (I2) et sur sa surface circonférentielle externe (02), sont respectivement pourvues d'une couche d'agent adhésif (HS1, HS2) destinée à former une liaison par fusion de matières par vulcanisation avec un mélange d'élastomère coulant.

2. Manchon selon la revendication 1,
**caractérisé en ce que** la partie de manchon extérieure (1) est glissée sur la partie de manchon intérieure (2) avec un ajustement à pincement.

3. Manchon selon la revendication 1 ou 2, **caractérisé en ce que** la partie de manchon extérieure (1) est reliée à la partie de manchon intérieure (2) par le biais d'une couche de caoutchouc (TVG) qui n'est initialement que partiellement vulcanisée.

4. Manchon selon l'une des revendications 1 à 3, **caractérisé en ce qu'**il existe une liaison par fusion de matières entre la surface circonférentielle interne (11) de la partie de manchon extérieure (1) et la surface circonférentielle externe (02) de la partie de manchon intérieure (2) sur la totalité de la surface ou seulement sur une ou plusieurs surfaces partielles des surfaces circonférentielles (11, 02).

5. Manchon selon l'une des revendications 1 à 4, **caractérisé en ce que** la partie de manchon intérieure (2) possède des ouvertures, notamment au moins un trou oblong (L2) qui s'étend selon le pourtour, de préférence deux trous oblongs (L2) ou plus, pour le passage d'un mélange d'élastomère coulant.

6. Manchon selon l'une des revendications 1 à 5, **caractérisé en ce que** la partie de manchon extérieure (1) et/ou la partie de manchon intérieure (2) sont respectivement des pièces pliées/découpées composées d'une tôle.

7. Manchon selon l'une des revendications 1 à 6, **caractérisé en ce que** les arêtes (K1, K2) qui délimitent les fentes (S1, S2) dans la partie de manchon extérieure (1) et/ou dans la partie de manchon intérieure (2) sont de configuration rectiligne.

8. Manchon selon l'une des revendications 1 à 7, **caractérisé en ce que** les fentes (S1, S2) dans la partie de manchon extérieure (1) et/ou dans la partie de manchon intérieure (2) sont disposées en étant mutuellement décalées de 90°, 180° ou 270°.

9. Manchon selon l'une des revendications 1 à 8, **caractérisé en ce qu'**une épaisseur nominale (DN) du manchon est obtenue par la somme des épaisseurs (D1, D2) de la partie de manchon extérieure (1) et de la partie de manchon intérieure (2).

10. Manchon selon l'une des revendications 1 à 9, **caractérisé en ce qu'**un moletage est estampé sur la surface circonférentielle externe (O1) de la partie de manchon extérieure (1).

11. Manchon selon l'une des revendications 1 à 10, **caractérisé en ce que** la partie de manchon extérieure (1) est pourvue d'une couche d'agent adhésif (HS1) sur sa surface circonférentielle interne (I1) et sur sa surface circonférentielle externe (O1) et, sur sa surface circonférentielle externe (O1), d'une couche d'élastomère (8) qui se trouve au-dessus de la couche d'agent adhésif (HS).

12. Manchon selon la revendication 11, **caractérisé en ce que** la couche d'agent adhésif (HS1) sur la surface circonférentielle externe (01) de la partie de manchon extérieure (1) se compose d'une couche primaire (6) à base de résine phénolique déposée directement sur la surface circonférentielle externe (01).

13. Manchon selon l'une des revendications 1 à 12, **caractérisé en ce que** la couche d'agent adhésif (HS1) sur la surface circonférentielle interne (I1) de la partie de manchon extérieure (1) et/ou la couche d'agent adhésif (HS2) sur la surface circonférentielle externe (01) de la partie de manchon intérieure (2) est une double couche (6, 7) qui se compose d'une couche primaire (6) à base de résine phénolique déposée directement sur la surface circonférentielle interne (11) et/ou la surface circonférentielle externe (02) et d'une couche d'agent adhésif de caoutchouc (7) qui se trouve au-dessus de la couche primaire (6).

14. Manchon selon la revendication 12 ou 13, **caractérisé en ce que** la couche primaire (6) déposée directement sur la surface circonférentielle interne (I1) ou la surface circonférentielle externe (O1) présente une épaisseur de couche de film sec (D6) dans la plage de 1 à 3 µm.

15. Manchon selon la revendication 13 ou 14, **caractérisé en ce que** la couche d'agent adhésif de caoutchouc (7) qui se trouve au-dessus de la couche primaire (6) présente une épaisseur de couche de film sec (D7) dans la plage de 3 à 30 µm.

16. Manchon selon l'une des revendications 11 à 15, **caractérisé en ce que** la couche d'élastomère (8) qui se trouve au-dessus de la couche d'agent adhésif (HS1) est une couche en caoutchouc entièrement réticulée, notamment en NBR, de préférence avec une dureté Shore A égale à 70.

17. Manchon selon l'une des revendications 11 à 16, **caractérisé en ce que** la couche d'élastomère (8) qui se trouve au-dessus de la couche d'agent adhésif (HS1) est recouverte par un film de protection (9).

18. Utilisation d'un manchon selon l'une des revendications 1 à 15 en tant que manchon externe (AHÜ) dans un coussinet en élastomère (3), le manchon externe (AHÜ) étant relié par adhérence à demeure à un manchon interne (IHÜ) par une couche d'élastomère (4) vulcanisée.

19. Utilisation selon la revendication 18, **caractérisée en ce que** les parties de manchon (1, 2) dans le coussinet en élastomère (3) sont reliées l'une à l'autre par le biais d'un élastomère issu de la couche d'élastomère (4) qui se trouve entre les surfaces (I1, 02) se faisant mutuellement face des parties de manchon (1, 2), disposé entre la surface circonférentielle interne (I1) de la partie de manchon extérieure (1) et la surface circonférentielle externe (02) de la partie de manchon intérieure (2), ainsi que par le biais de leurs couches d'agent adhésif (HS1, HS2) respectives.
